Europäisches Patentamt

European Patent Office

Office européen des brevets

(19)

(11) Veröffentlichungsnummer : **0 175 202**
**B1**

(12)

# EUROPÄISCHE PATENTSCHRIFT

(45) Veröffentlichungstag der Patentschrift :
05.04.89

(51) Int. Cl.⁴ : **C 08 F   8/32**

(21) Anmeldenummer : **85111072.6**

(22) Anmeldetag : **03.09.85**

(54) Wasserlösliche Polymere sowie Verfahren zu ihrer Herstellung.

(30) Priorität : **05.09.84 DE 3432569**

(43) Veröffentlichungstag der Anmeldung :
**26.03.86 Patentblatt 86/13**

(45) Bekanntmachung des Hinweises auf die Patenterteilung : **05.04.89 Patentblatt 89/14**

(84) Benannte Vertragsstaaten :
**AT BE CH DE FR GB IT LI LU NL SE**

(56) Entgegenhaltungen :
**BE—A—   510 284**
**FR—A— 2 308 663**
**US—A— 3 406 139**

(73) Patentinhaber : **Benckiser-Knapsack GmbH**
**Dr. Albert-Reimann-Strasse 2**
**D-6802 Ladenburg (DE)**

(72) Erfinder : **Kleemann, Stephan, Dr. Dipl.-Chem.**
**Mozartstrasse 25**
**D-6905 Schriesheim (DE)**
Erfinder : **Wahl, Fritz**
**Im Wirbel 61**
**D-6800 Mannheim-Rheinau (DE)**

(74) Vertreter : **Grussdorf, Jürgen, Dr. et al**
**Patentanwälte Zellentin & Partner Rubensstrasse 30**
**D-6700 Ludwigshafen (DE)**

EP 0 175 202 B1

## Beschreibung

Gegenstand der vorliegenden Erfindung sind wasserlösliche Aminpolymerisate, deren Salze sowie Verfahren zu ihrer Herstellung.

Die Herstellung von wasserlöslichen Produkten durch Reaktion von Polyacrylnitril oder einem seiner Copolymeren mit primären oder sekundären Aminen ist bekannt und wird nach verschiedenen Verfahren durchgeführt.

Für gewisse Anwendungsbereiche, wie z. B. als Entwässerungs- oder Ausflockmittel bei der Papierherstellung oder Abwässerbehandlung, ist es vorteilhaft, wasserlösliche Polymerisate mit möglichst hohen Molekulargewichten, frei von Schadstoffen und guter biologischer Abbaubarkeit, herzustellen.

Nach dem Stand der Technik werden bis zu 20 Moläquivalente eines Amins pro Moläquivalent an Nitrilgruppen des Ausgangspolymerisates umgesetzt (s. z. B. DE 2 948 795). Als Katalysator werden wenigstens 2 Mol-% Schwefel, Schwefelwasserstoff oder einer Organoschwefelverbindung, bezogen auf das Gewicht des Polymerisates, verwendet. Zur Handhabung der während der Reaktion auftretenden hochviskosen Phasen wird ein mindestens 3- bis 4-fach molarer Überschuß der Aminkomponente als Reaktionspartner und Lösemittel benötigt. Bei der Reaktion von Polyacrylnitril oder einem seiner Copolymeren mit 1 bis 2 Moläquivalenten eines primären oder sekundären Amins pro Moläquivalent an Nitrilgruppen des Ausgangspolymerisates, werden in Gegenwart von bis zu 8 Mol-% Schwefel, bei 80 bis 120 °C, gemäß der DE 29 48 795, auch bei langen Reaktionszeiten überwiegend wasserunlösliche Produkte erhalten. Zudem fallen die so erhaltenen Produkte durch einen starken Geruch nach Schwefelwasserstoff auf. Auch nach der zusätzlich benötigten anschließenden Destillation verbleibt bei diesem Verfahren ein nicht unerheblicher Teil des überschüssigen Amins im Produkt und führt bei der Anwendung im Papier- oder Abwässerbereich zu erhöhter Geruchs- und Umweltbelastung.

Die US-Patentschrift 3 406 139 beschreibt ein Verfahren zur Synthese von Polyvinylimidazolinen durch Reaktion von 50 bis 100 Mol-%-haltigem Polyacrylnitril oder Polymethacrylnitril mit mindestens äquivalenten Mengen eines Polyamines. Die Reaktion wird entweder ohne besonderes Lösemittel durchgeführt, wobei ein Überschuß des Polyamins als Lösemittel dienen kann, oder in einem Lösemittel für das Polymere durchgeführt, welches gegenüber allen Reaktanten inert ist, oder in einem sowohl das Ausgangspolymerisat als auch für das Reaktionsprodukt nicht-lösenden (non-solvent) organischen Medium in Suspension durchgeführt. Als Katalysator werden Schwefel oder schwefelhaltige Verbindungen angegeben. Die verwendeten Lösemittel sind nicht oder nur schwer biologisch abbaubar und führen, soweit sie nicht recycliert werden, aufgrund dessen zu einer erheblichen zusätzlichen Belastung der kommunalen Klärwerke bzw. der Gewässer allgemein.

In der US-Patentschrift 3 647 769 wird ein Verfahren zur Darstellung eines wasserlöslichen Polymeren durch Umsetzung von Polyacrylnitril mit einem Amin oder Polyamin in Gegenwart von Wasser, beschrieben. Dabei wird ebenfalls die Aminkomponente im großen Überschuß verwendet bzw. ein organisches Lösemittel wie z. B. Xylol zugegeben. Da bei diesem Verfahren keine Katalysatoren zur Anwendung kommen, werden sehr lange Reaktionszeiten (17 bis 24 Stunden) bei hohen Temperaturen (bis zu 180 °C) benötigt. Dies führt erfahrungsgemäß zu einem für viele Anwendungen unerwünscht starken Abbau der Polymerstruktur.

Ein weiteres Verfahren zur Herstellung von solchen Produkten wird in der FR-A 23 08 663 beschrieben, wobei Polyacrylnitril in einem « inerten Öl », welches dem « Nichtlösungsmittel » der US-P 3 406 139 entspricht, mit Ethylendiamin in Gegenwart eines Schwefelkatalysators umgesetzt wird, wobei ein weiteres niedrig siedendes Lösungsmittel, wie Toluol, zur Verdünnung zugegeben und nach Beendigung der Reaktion gegebenenfalls mit einem Überschuß Ethylendiamin wieder abdestilliert wird. Die in der öligen Phase dispergierten, reineren Poly(vinylimidazoline) können dann mit Wasser leicht ausgewaschen und in geeigneter Konzentration als Flockulierungsmittel eingesetzt werden. Durch die mehrfachen Destillationen und den Zusatz der inerten Öle wird dieses Verfahren relativ aufwendig.

Ziel der vorliegenden Erfindung war es, neue wassserlösliche Polymere sowie Verfahren zu ihrer Herstellung zu entwickeln, bei welchen die oben erwähnten Probleme der Geruchs- bzw. Umweltbelastung einerseits sowie des starken Abbaues der Polymerstruktur andererseits, vermieden werden. Diese Aufgabe wird dadurch gelöst, daß man wasserlösliche Polymere oder deren Salze durch Umsetzung von Polyacrylnitril oder Polyacrylnitrilcopolymerisaten aus mindestens 20 Mol-% Acrylnitril und bis zu 80 Mol-% Acrylsäure, eines Acrylsäurederivates oder einer copolymerisierbaren Vinylverbindung mit einem oder mehreren Polyaminen in Gegenwart eines schwefelhaltigen Katalysators bei Temperaturen von 100-180 °C herstellt, wobei man die Umsetzung in Gegenwart eines Alkohols oder Polyols mit einem Siedepunkt von über 95 °C durchführt und das Reaktionsprodukt anschließend mit Wasser oder einem Gemisch aus Wasser und einem mit Wasser mischbaren organischen Lösemittel bei Temperaturen von 70-100 °C, vorzugsweise 80-90 °C behandelt und das Polyamin in einer Menge von 0,6-3,0, vorzugsweise 1-2 Moläquivalenten bezogen auf die Nitrilgruppen des Polyacrylnitrils zugesetzt wird.

Wir fanden nun überraschenderweise, daß durch Zusatz von 0.5 bis 10 Moläquivalenten eines hoch siedenden Alkohols bzw. Polyols, pro Moläquivalent an Nitrilgruppen des Ausgangspolymerisates, bei sonst gleichen Reaktionsbedingungen (s. DE 29 48 795), durch den Einbau der Alkohol- bzw. Polyolgruppen in die Polymeren ein gut wasserlösliches Polymerisat erhalten wird. Besonders hervorzuheben ist, daß die Bildung dieser neuen Polymere, gegenüber dem Stand der Technik, bereits durch wesentlich geringere Mengen an schwefelhaltigen Verbindungen ausreichend katalysiert wird. Dies äußert sich in einer starken Verminderung der produktbedingten Geruchs- bzw. Umweltbelastung. Dabei ist es möglich, durch geeignete Wahl der Reaktionsparameter, nicht nur eine Minimierung des Polymerabbaues, sondern sogar eine Kettenverlängerung durch intermolekulare Verknüpfungen zu erhalten.

Die in Gegenwart von z. B. Ethylenglykol hergestellten Aminpolymerisate zeigen gegenüber den, unter sonst gleichen Bedingungen, in Abwesenheit des Alkohols hergestellten Produkten eine deutliche Verbesserung der produktspezifischen Eigenschaften im Hinblick auf Entwässerungsbeschleunigung bzw. Ausflockung. Nachträglich mit z. B. Ethylenglykol versetzte Vergleichsprodukte weisen diese Effekte nicht in vergleichbarem Maße auf. Offensichtlich führt die Gegenwart der Alkoholkomponente unter den verwendeten Reaktionsbedingungen zu einer partiellen Spaltung der ursprünglich gebildeten Amidineinheiten in Imidoester, Ester oder Carboxylatgruppen.

Nach dem erfindungsgemäßen Verfahren hergestellte Polymere stellen daher neue Produkte dar.

Das als erster Bestandteil zur Herstellung der neuen Aminpolymerisate verwendete Nitrilpolymerisat a) besteht aus Polyacrylnitril oder einem Copolymerisat, das aus wenigstens 20 Mol-% Acrylnitrilmonomeren und aus bis zu 80 Mol-% Acrylsäure oder Acrylsäurederivaten, wie Alkylacrylat, Methacrylsäure, Alkylmethacrylat, Methacrylnitril, Acrylamid, N-Alkylacrylamid, N-Hydroxyalkylacrylamid, N,N-Dialkylacrylamid, N,N-Bis(hydroxyalkyl)acrylamid, Methacrylamid, N-Alkylmethacrylamid, N-Hydroxyalkylmethacrylamid, N,N-Dialkylmethacrylamid, N,N-Bis(hydroxyalkyl)methacrylamid oder einer Vinylverbindung, wie Alkylvinylketon, Vinyl-, Allyl-, Methallyl-, 2-Allyloxyäthan-, 2-Hydroxy-3-allyloxypropan-, Vinylbenzol-, Vinyloxybenzolsulfonsäure, Styrol oder Alkylcrotonat, wobei jeder Alkylrest 1 bis 5 Kohlenstoffatome aufweist, hergestellt worden ist. Die Molekulargewichtsbereiche variieren entsprechend dem Typ des eingesetzten Acrylnitrilpolymerisates bzw. Copolymerisates und sollten im Bereich von 50 000 bis 5 000 000, vorzugsweise zwischen 100 000 und 3 000 000, liegen.

Der zweite Bestandteil zur Herstellung des Aminpolymerisates besteht aus 0.6 bis 3.0 Moläquivalenten eines Aminierungsmittels b) aus der Gruppe der Polyamine, vorzugsweise Ethylendiamin, bezogen auf die in dem Polymerisat a) vorhandenen Nitrilgruppen.

Als dritte Komponente zur Herstellung des Aminpolymerisates sollten 0.5 bis 10 Moläquivalente, bezogen auf die Nitrilgruppen des Polymerisates a), eines hoch siedenden Alkohols, mit einem Siedepunkt oberhalb 95 °C, aus der Gruppe $C_nH_{2n-1}OH$, mit n = 4 bis 30, wie beispielsweise 1-Propanol, 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 1-Dodecanol, Benzylalkohol, vorzugsweise n = 6 bis 10, sowie Polyole, wie z. B. Ethylenglykol, Diethylenglykol, Triethylenglykol, Polyethylenglykol, 1,2-Propandiol, 1,3-Propandiol, 1,2-Butandiol, 1,3-Butandiol, 1,4-Butandiol, 2,3-Butandiol, 1,4-Pentandiol, 1,5-Pentandiol, 2,3-Pentandiol, 2,4-Pentandiol, 1,2-Hexandiol, 1,5-Hexandiol, 1,6-Hexandiol, 2,3-Hexandiol, 2,5-Hexandiol, 1,4-Dimethylolcyclohexan, Glycerin, 1,2,4-Butantriol, Pentaerythrit, Neopentylglykol, Trimethylolpropan, vorzugsweise Ethylenglykol, verwendet werden. Diese Aufzählung gibt nur einen exemplarischen Teil aus der Vielfalt der möglichen Alkohole wieder. Ebenso können Mischungen derartiger Alkohole zur Anwendung gelangen.

Der als vierter Bestandteil zur Herstellung des Aminpolymerisates verwendete Schwefelaktivator wird aus einem großen Bereich von schwefelhaltigen Verbindungen ausgewählt. Er sollte wenigstens 0.5 Mol-%, bezogen auf die Nitrilgruppen des Polymerisates a), eines Schwefelaktivators aus der Gruppe Schwefel, Schwefelwasserstoff oder eine Organoschwefelverbindung mit wenigstens einer Mercapto-, Thiocarbonyl-, Thioamid- oder Thiocarbonsäuregruppe, Schwefelchloriden, Polysulfiden oder Phosphorpentasulfid enthalten, bevorzugt sind 1 bis 3 Mol-% an elementarem Schwefel.

Gemäß einer allgemeinen Reaktionsweise werden das Nitrilpolymerisat, das Aminierungsmittel, die Alkoholkomponente und der Schwefelaktivator, drucklos oder unter Druck, für etwa 10 Minuten bis 6 Stunden, vorzugsweise 20 bis 100 Minuten, auf eine Temperatur von 100 bis 180 °C, bevorzugt auf 110 bis 150 °C, erhitzt. Zur gleichmäßigeren Verteilung des Schwefelaktivators kann es von Vorteil sein, diesen vor der Vereinigung sämtlicher Reaktionskomponenten bei 20 bis 60 °C im Aminierungsmittel bzw. einem Teil des Aminierungsmittels, zu lösen. Das während der Kondensationsreaktion gebildete Aminpolymerisat wird frühestens beim ersten Auftreten von vollständiger Wasserlöslichkeit mit Wasser oder einem Gemisch aus Wasser und einem mit Wasser mischbaren organischen Lösemittel, versetzt und anschließend 10 bis 90 Minuten bei 70 bis 100 °C, vorzugsweise 20 bis 40 Minuten bei 80 bis 90 °C, gehalten.

Sollte für gewisse Anwendungen ein vollständig sulfidfreies Produkt erforderlich sein, kann dies in bekannter Weise, beispielsweise durch Abtrennung als Eisensulfid, oder durch Umsetzung mit wenigstens 0.25 Mol-% $H_2O_2$, bezogen auf das Polymerisat a), erhalten werden.

Gegebenenfalls kann das Aminpolymerisat in Form der freien Base in ein Salz einer anorganischen Säure, einer organischen Säure oder ein quaternäres Ammoniumsalz, nach auf dem Fachgebiet an sich bekannten Methoden, umgewandelt werden. Für die Salzbildung geeignete Mineralsäuren umfassen u. a. Salzsäure, Bromwasserstoffsäure, Jodwasserstoffsäure, Sulfonsäuren, schwefelige Säure, Schwefelsäure, phosphorige Säure, Phosphorsäure und Phosphonsäuren. Zur Salzbildung geeignete organische Säuren umfassen u. a. Ameisensäure, Essigsäure, Oxalsäure, Weinsäure, Zitronensäure, Glykolsäure, Propionsäure, Buttersäure, Isobuttersäure, Benzoesäure und p-Toluolsulfonsäure. Die Alkylierungsmittel, welche zur Bildung der quaternären Ammoniumsalze geeignet sind, umfassen u. a. Methyl-, Äthyl-, Propyl- und Isopropyljodide, -bromide und -chloride sowie ebenso die entsprechenden Sulfate.

Zur Herstellung eines Salzes einer Mineralsäure oder einer organischen Säure wird eine einfache Säure-Base-Neutralisation durchgeführt. Das Aminpolymerisat in Form der freien Base wird bei Bedarf in einem geeigneten Lösemittel aufgelöst und mit einer Säuremenge, welche äquivalent oder überschläglich zu der Anzahl der Äquivalente an vorhandenen Amingruppen ist, neutralisiert, oder umgekehrt. Das Salz kann dann bei Bedarf ausgefällt oder in anderer Weise aus dem Lösemittelsystem entfernt werden. Ebenfalls kann es direkt zur Anwendung gebracht werden.

Die Bildung des quaternären Ammoniumsalzes wird in ähnlicher Weise zu der zuvor beschriebenen Neutralisationsmethode durchgeführt. Das Aminpolymerisat in Form der freien Base wird in einem geeigneten Lösemittel aufgelöst und dann das Alkylierungsmittel zugegeben. Die Reaktion wird bis zum praktischen Ende der Umsetzung durchgeführt, in einigen Fällen kann ein mäßiges Erwärmen zur Beschleunigung der Reaktion angewendet werden.

Das erfindungsgemäße Verfahren besteht aus bestimmten Reaktionsbedingungen, welche neben der chemischen Struktur auch die physikalischen Eigenschaften der Aminpolymerisate bestimmen. Besonders hervorzuheben ist, daß dabei nicht nur, entsprechend dem Stand der Technik, eine Verkürzung der Polymerkette, sondern überraschenderweise sogar eine Kettenverlängerung während der Reaktion, gefunden wurde. Diese Verlängerung der Polymerkette wird durch Beachtung verschiedener Parameter wie beispielsweise Katalysatoreinsatz, Alkohol- bzw. Polyolzusatz, Reaktionstemperatur oder Reaktionszeit erreicht. Ohne Verwendung der Alkoholkomponente oder Einsatz eines Katalysators wurde in keinem Fall eine Polymerkettenverlängerung beobachtet. Größere Mengen an Katalysator verkürzen die Reaktionszeit und begünstigen damit die Kettenverlängerung, allerdings wird dabei die Umweltfreundlichkeit des beanspruchten Verfahrens verringert. Es ist bekannt, daß erhöhte Temperatur, große Scherkräfte und lange Reaktionszeiten zu einer Verkürzung der Polymerkettenlänge führen. Andererseits sind Polyamine aufgrund ihrer Multifunktionalität zu Reaktionen unter intermolekularer Kettenverknüpfung befähigt.

Ob der Kettenabbau oder die Kettenverlängerung überwiegt hängt also in hohem Maße von den verwendeten Reaktionsbedingungen ab. Die Reaktionstemperatur und Reaktionsdauer müssen deshalb derart aufeinander abgestimmt werden, daß eine Minimierung des Polymerkettenabbaues während der Reaktion erreicht wird und dadurch die Polymerkettenverlängerung durch intermolekulare Verknüpfungen des Polyamins überwiegt. Bevorzugt sind eine Produkttemperatur von 110 bis 120 °C bei einer Reaktionsdauer von 20 bis 40 Minuten.

Die so erhaltenen Produkte zeichnen sich gegenüber bekannten Polymerisaten durch einen Gehalt von 0.5 bis 10 Moläquivalenten, bezogen auf die Nitrilgruppen des eingesetzten Polymerisates, eines hoch siedenden Alkohols, mit einem Siedepunkt oberhalb 95 °C, aus der Gruppe $C_nH_{2n-1}OH$, mit n = 4 bis 30, wie beispielsweise 1-Propanol, 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 1-Dodecanol, Benzylalkohol, vorzugsweise n = 6 bis 10, sowie Polyole, wie z. B. Ethylenglykol, Diethylenglykol, Triethylenglykol, Polyethylenglykol, 1,2-Propandiol, 1,3-Propandiol, 1,2-Butandiol, 1,3-Butandiol, 1,4-Butandiol, 2,3-Butandiol, 1,4-Pentandiol, 1,5-Pentandiol, 2,3-Pentandiol, 2,4-Pentandiol, 1,2-Hexandiol, 1,5-Hexandiol, 1,6-Hexandiol, 2,3-Hexandiol, 2,5-Hexandiol, 1,4-Dimethylolcyclohexan, Glycerin, 1,2,4-Butantriol, Pentaerythrit, Neopentylglykol, Trimethylolpropan, vorzugsweise Ethylenglykol, aus. Diese Aufzählung gibt nur einen exemplarischen Teil aus der Vielfalt der möglichen Alkohole wieder. Ebenso können Mischungen derartiger Alkohole enthalten sein.

Die erfindungsgemäßen Polymerisate fallen als wässrige Lösung an. Sollte für spezielle Anwendungen eine Verwendung in fester Form erforderlich sein, so kann diese nach dem Fachmann an sich bekannten Verfahren, wie beispielsweise durch Sprühtrocknung, erhalten werden. Die derart hergestellten Produkte zeichnen sich durch gute Löseeigenschaften aus.

Aufgrund dieser erstmaligen Möglichkeit zur einfachen Vergrößerung der Polymerkettenlänge, eignet sich das neue Verfahren besonders gut zur Wiederverwertung der, beispielsweise während der Polyacrylnitrilherstellung anfallenden, Abfallpolymerisate. Diese Polyacrylnitrilabfälle müßten ansonsten mittels aufwendiger Verfahren durch Verbrennung, mit anschließender Absorption der dabei auftretenden giftigen Gase, wie beispielsweise nitrosen Gasen oder Blausäure, entsorgt werden. Durch Kombination der Polymerkettenverlängerung mit dem synergistischen Effekt der Alkoholkomponente ist es möglich, mittels einfacher technischer Verfahren, aus qualitativ minderwertigen Produkten, im Vergleich zu herkömmlichen Entwässerungsbeschleunigern bzw. Flockungsmitteln überlegene Polymerisate, herzustellen.

Das Polymerisat wird durch den K-Wert nach H. Fikentscher, Cellulosechemie 13, S.48-64 sowie 71-74 (1932) in Dimethylformamid (für das Ausgangspolymerisat) bzw. 1 N Natriumnitrat-Lösung (für die erfindungsgemäßen Polymerisate) bei 30 °C bestimmt. Dabei bedeutet K = k × 1 000.

Im folgenden soll anhand mehrerer Beispiele die Umsetzung von Polyacrylnitrilpolymeren gemäß der vorliegenden Erfindung zu wasserlöslichen kationischen Polymerlösungen beschrieben werden.

Beispiel 1

In einem 500 ml Dreihalskolben mit KPG-Rührer und Rückflußkühler werden 0.1 g Schwefel in 33.0 g Ethylendiamin vorgelegt und unter Rühren mit 83.7 ml Ethylenglykol vermengt. Anschließend werden 26.8 g Polyacrylnitrilfasern mit einem Gehalt von 3 % Allylsulfonat und einem K-Wert von 81.3 zugegeben und das Gemisch auf eine Badtemperatur von 130 °C erwärmt. Nach 3 Stunden bei 130 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 943 g einer 5 %-igen Polymerlösung mit einem K-Wert von 80.9 und einer Viskosität von 112.3 mPa · s. Die Ausbeute an wasserlöslichen Polymerprodukten beträgt 98.1 %, bezogen auf eingesetzte Polyacrylnitrilfaser.

Beispiel 2

In einem 10 l Planschliffkolben mit Ankerrührer und Rückflußkühlung werden 6.4 g elementarer Schwefel in 660 g Ethylendiamin vorgelegt und unter Rühren mit 1 860 g Ethylenglykol vermengt. Anschließend werden 535 g Polyacrylnitrilfasern mit einem Gehalt von 3 % Allylsulfonat und einem K-Wert von 81.3 zugegeben und das Gemisch auf eine Badtemperatur von 150 °C erwärmt. Nach 30 Minuten bei 150 °C wird das entstandene Produkt mit 6 000 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 18.6 kg einer 5 %-igen Polymerlösung mit einem K-Wert von 109.6 und einer Viskosität von 512 mPa · s. Die Ausbeute an wasserlöslichen Polymerprodukten beträgt 98.2 %, bezogen auf eingesetzte Polyacrylnitrilfaser.

Beispiel 3

In einem 10 l Planschliffkolben mit Ankerrührer und Rückflußkühlung werden 6.4 g elementarer Schwefel in 660 g Ethylendiamin vorgelegt und unter Rühren mit 1 240 g Ethylenglykol vermengt. Anschließend werden 535 g Polyacrylnitrilfasern mit einem Gehalt von 7 % Allylsulfonat und einem K-Wert von 82.9 zugegeben und das Gemisch auf eine Badtemperatur von 150 °C erwärmt. Nach 65 Minuten bei 150 °C wird das entstandene Produkt mit 6 000 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 18.6 kg einer 5 %-igen Polymerlösung mit einem K-Wert von 80.0 und einer Viskosität von 102.8 mPa · s. Die Ausbeute an wasserlöslichen Polymerprodukten beträgt 96.7 %, bezogen auf eingesetzte Polyacrylnitrilfaser.

Beispiel 4

In einem 160 l Rührkessel mit Kondensation werden 160 g elementarer Schwefel in 16.5 kg Ethylendiamin vorgelegt und unter Rühren mit 38.7 kg Ethylenglykol vermengt. Anschließend werden 13.25 kg Polyacrylnitrilfasern mit einem Gehalt von 3 % Allylsulfonat und einem K-Wert von 81.3 zugegeben und das Gemisch auf eine Temperatur von 120-130 °C erwärmt. Nach 50 Minuten bei dieser Temperatur wird das entstandene Produkt mit 97 kg Wasser versetzt und weitere 30 Minuten bei 85-90 °C gehalten.

Die Reaktion ergibt 161 kg einer 15 %-igen Polymerlösung mit einem K-Wert von 80.1 und einer Viskosität von 643 mPa · s. Die Umsetzung zu wasserlöslichen Polymerprodukten verläuft quantitativ.

Beispiel 5

In einem 500 ml Dreihalskolben mit KPG-Rührer und Rückflußkühler werden 0.32 g Schwefel in 33.0 g Ethylendiamin vorgelegt und unter Rühren mit 86.9 ml Triethylenglykol vermengt. Anschließend werden 26.8 g Polyacrylnitrilfasern mit einem Gehalt von 7 % Allylsulfonat und einem K-Wert von 82.9 zugegeben und das Gemisch auf eine Badtemperatur von 150 °C erwärmt. Nach 35 Minuten bei 150 °C wird das entstandene Produkt mit 500 ml Wasser versetzt und weitere 30 Minuten bei 85-90 °C gehalten. Nach dem Abkühlen auf Raumtemperatur wird mit 6.4 ml 10 %-iger H$_2$O$_2$-Lösung versetzt, mit Wasser auf eine 5 %-ige Lösung verdünnt und anschließend über ein 0.1 mm Sieb von ungelösten Partikeln abgetrennt.

Die Reaktion ergibt 700 g einer 5 %-igen Polymerlösung mit einem K-Wert von 78.5 und einer Viskosität von 98.4 mPa · s. Die Ausbeute an wasserlöslichen Polymerprodukten beträgt 73.0 %, bezogen auf eingesetzte Polyacrylnitrilfaser.

Beispiel 6

In einem 500 ml Dreihalskolben mit KPG-Rührer und Rückflußkühler werden 0.32 g Schwefel in 33.0 g Ethylendiamin vorgelegt und unter Rühren mit 85.6 ml Diethylenglykol vermengt. Anschließend werden 26.8 g Polyacrylnitrilfasern mit einem Gehalt von 7 % Allylsulfonat und einem K-Wert von 82.9 zugegeben und das Gemisch auf eine Badtemperatur von 150 °C erwärmt. Nach 35 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 780 g einer 5 %-igen Polymerlösung mit einem K-Wert von 85.9 und einer Viskosität von 141.0 mPa · s. Die Ausbeute an wasserlöslichen Polymerprodukten beträgt 81.1 %, bezogen auf eingesetzte Polyacrylnitrilfaser.

Beispiel 7

In einem 500 ml Dreihalskolben mit KPG-Rührer und Rückflußkühler werden 0.32 g Schwefel in 33.0 g Ethylendiamin vorgelegt und unter Rühren mit 83.7 ml Ethylenglykol vermengt. Anschließend werden 26.8 g Polyacrylnitrilfasern mit einem Gehalt von 3.4 % Methallylsulfonat und einem K-Wert von 61.3 zugegeben und das Gemisch auf eine Badtemperatur von 150 °C erwärmt. Nach 35 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 897 g einer 5 %-igen Polymerlösung mit einem K-Wert von 92.1 und einer Viskosität von 281 mPa · s. Die Ausbeute an wasserlöslichen Polymerprodukten beträgt 93.2 %, bezogen auf eingesetzte Polyacrylnitrilfaser.

Beispiel 8

In einem 500 ml Dreihalskolben mit KPG-Rührer und Rückflußkühler werden 0.32 g Schwefel in 33.0 g Ethylendiamin vorgelegt und unter Rühren mit 83.7 ml Ethylenglykol vermengt. Anschließend werden 26.8 g Polyacrylnitrilfasern mit einem K-Wert von 102.5 zugegeben und das Gemisch auf eine Badtemperatur von 150 °C erwärmt. Nach 55 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 834 g einer 5 %-igen Polymerlösung mit einem K-Wert von 109.1 und einer Viskosität von 523 mPa · s. Die Ausbeute an wasserlöslichen Polymerprodukten beträgt 94.8 %, bezogen auf eingesetzte Polyacrylnitrilfaser.

Beispiel 9

In einem 500 ml Dreihalskolben mit KPG-Rührer und Rückflußkühler werden 0.32 g Schwefel in 33.0 g Ethylendiamin vorgelegt und unter Rühren mit 83.7 ml Ethylenglykol vermengt. Anschließend werden 26.8 g Dralon® zugegeben und das Gemisch auf eine Badtemperatur von 150 °C erwärmt. Nach 65 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 928 g einer 5 %-igen Polymerlösung mit einem K-Wert von 71.3 und einer Viskosität von 83.2 mPa · s. Die Ausbeute an wasserlöslichen Polymerprodukten beträgt 96.5 %, bezogen auf eingesetzte polyacrylnitrilfaser.

Beispiel 10

In einem 500 ml Dreihalskolben mit KPG-Rührer und Rückflußkühler werden 0.32 g Schwefel in 33.0 g Ethylendiamin vorgelegt und unter Rühren mit 83.7 ml Ethylenglykol vermengt. Anschließend werden 26.8 g Beslon® zugegeben und das Gemisch auf eine Badtemperatur von 150 °C erwärmt. Nach 65 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 833 g einer 5 %-igen Polymerlösung mit einem K-Wert von 84.6 und einer Viskosität von 130.4 mPa · s. Die Ausbeute an wasserlöslichen Polymerprodukten beträgt 86.7 %, bezogen auf eingesetzte Polyacrylnitrilfaser.

Beispiel 11

In einem 500 ml Dreihalskolben mit KPG-Rührer und Rückflußkühler werden 0.32 g Schwefel in 33.0 g Ethylendiamin vorgelegt und unter Rühren mit 83.7 ml Ethylenglykol vermengt. Anschließend werden 26.8 g Courtelle® zugegeben und das Gemisch auf eine Badtemperatur von 150 °C erwärmt. Nach 65 Minuten bei 150 °C wird das entstandene Produkt mit 500 ml Wasser versetzt und weitere 30 Minuten bei 85-90 °C gehalten. Nach dem Abkühlen auf Raumtemperatur wird mit Wasser auf eine 5 %-ige Lösung verdünnt und anschließend über ein 0.1 mm Sieb von ungelösten Partikeln abgetrennt.

Die Reaktion ergibt 921 g einer 5 %-igen Polymerlösung mit einem K-Wert von 74.7 und einer Viskosität von 93.7 mPa · s. Die Ausbeute an wasserlöslichen Polymerprodukten beträgt 95.8 %, bezogen auf eingesetzte Polyacrylnitrilfaser.

Nach dem erfindungsgemäßen Verfahren können auch Polymere mit niedrigeren K-Werte erhalten werden, wie die nachfolgenden Beispiele belegen.

Beispiel 12

In einem 1 Liter Dreihalskolben mit KPG-Rührer und Rückflußkühler werden 0.32 g Schwefel in 33.0 g Ethylendiamin vorgelegt und unter Rühren mit 62.0 g Ethylenglykol vermengt. Anschließend werden 26.5 g Polyacrylnitrilfasern mit einem Gehalt von 3 % Allylsulfonat und einem K-Wert von 81.3 zugegeben und das Gemisch auf eine Badtemperatur von 175 °C erwärmt. Nach 2 Stunden bei 175 °C wird das entstandene Produkt mit 450 ml Wasser versetzt und weitere 30 Minuten bei 85-90 °C gehalten. Nach dem Abkühlen auf Raumtemperatur wird über ein 0.1 mm Sieb von ungelösten Partikeln abgetrennt.

Die Reaktion ergibt 565 g einer 10 %-igen Polymerlösung mit einem K-Wert von 31.6 und einer Viskosität von 38.0 mPa · s. Die Ausbeute an wasserlöslichen Polymerprodukten beträgt 99.9 %, bezogen auf eingesetzte Polyacrylnitrilfaser.

Beispiel 13

In einem 10 l Planschliffkolben mit Ankerrührer und Rückflußkühlung werden 6.4 g elementarer Schwefel in 660 g Ethylendiamin vorgelegt und unter Rühren mit 620 g Ethylenglykol vermengt. Anschließend werden 530 g Polyacrylnitrilfasern mit einem Gehalt von 3 % Allylsulfonat und einem K-Wert von 81.3 zugegeben und das Gemisch auf eine Badtemperatur von 180 °C erwärmt. Nach 135 Minuten bei 180 °C wird das entstandene Produkt mit 9 710 ml Wasser versetzt und weitere 30 Minuten bei 85-90 °C gehalten. Nach dem Abkühlen auf Raumtemperatur wird über ein 0.1 mm Sieb von ungelösten Partikeln abgetrennt.

Die Reaktion ergibt 11.36 kg einer 10 %-igen Polymerlösung mit einem K-Wert von 30.7 und einer Viskosität von 35,2 mPa · s. Die Ausbeute an wasserlöslichen Polymerprodukten beträgt 97.7 %, bezogen auf eingesetzte Polyacrylnitrilfaser.

Beispiel 14

In einem 1 Liter Dreihalskolben mit KPG-Rührer und Rückflußkühler werden 0.32 g Schwefel in 33.0 g Ethylendiamin vorgelegt und unter Rühren mit 31.0 g Ethylenglykol vermengt. Anschließend werden 26.5 g Polyacrylnitrilfasern mit einem Gehalt von 3 % Allylsulfonat und einem K-Wert von 81.3 zugegeben und das Gemisch auf eine Badtemperatur von 175 °C erwärmt. Nach 2 Stunden bei 175 °C wird das entstandene Produkt mit 490 ml Wasser versetzt und weitere 30 Minuten bei 85-90 °C gehalten. Nach dem Abkühlen auf Raumtemperatur wird über ein 0.1 mm Sieb von ungelösten Partikeln abgetrennt.

Die Reaktion ergibt 571 g einer 10 %-igen Polymerlösung mit einem K-Wert von 30.2 und einer Viskosität von 33.8 mPa · s. Die Ausbeute an wasserlöslichen Polymerprodukten beträgt 100 %, bezogen auf eingesetzte Polyacrylnitrilfaser.

Beispiel 15

In einem 1 Liter Dreihalskolben mit KPG-Rührer und Rückflußkühler werden 1.6 g Schwefel in 33.0 g Ethylendiamin vorgelegt und unter Rühren mit 31.0 g Ethylenglykol vermengt. Anschließend werden 26.5 g Polyacrylnitrilfasern mit einem Gehalt von 3 % Allylsulfonat und einem K-Wert von 81.3 zugegeben und das Gemisch auf eine Badtemperatur von 145 °C erwärmt. Nach 3 Stunden bei 145 °C wird das entstandene Produkt mit 475 ml Wasser versetzt und weitere 30 Minuten bei 85-90 °C gehalten. Nach dem Abkühlen auf Raumtemperatur wird über ein 0.1 mm Sieb von ungelösten Partikeln abgetrennt.

Die Reaktion ergibt 558 g einer 10 %-igen Polymerlösung mit einem K-Wert von 29.0 und einer Viskosität von 30.4 mPa · s. Die Ausbeute an wasserlöslichen Polymerprodukten beträgt 97.7 %, bezogen auf eingesetzte Polyacrylnitrilfaser.

Beispiel 16

In einem 160 l Rührkessel mit Kondensation werden 3 kg Schwefel in 16.8 kg Ethylendiamin vorgelegt und unter Rühren mit 15.8 kg Ethylenglykol vermengt. Anschließend werden 13.5 kg Polyacrylnitrilfasern mit einem Gehalt von 3 % Allylsulfonat und einem K-Wert von 81.3 zugegeben und das Gemisch auf eine Temperatur von 140 °C erwärmt. Nach 3 Stunden bei dieser Temperatur wird das entstandene Produkt mit Wasser auf eine 10 %-ige Lösung verdünnt und weitere 30 Minuten bei 85-90 °C gehalten. Nach dem Abkühlen auf Raumtemperatur wird über ein 0.1 mm Sieb von ungelösten Partikeln abgetrennt.

Die Reaktion ergibt 310 kg einer 10 %-igen Polymerlösung mit einem K-Wert von 31.8 und einer Viskosität von 40.1 mPa · s. Die Ausbeute an wasserlöslichem Polymerprodukt beträgt 100 %, bezogen auf eingesetzte Polyacrylnitrilfaser.

**Patentansprüche**

1. Verfahren zur Herstellung wasserlöslicher Polymerer oder deren Salze durch Umsetzung von Polyacrylnitril oder Polyacrylnitrilcopolymerisaten aus mindestens 20 Mol-% Acrylnitril und bis zu 80 Mol-% Acrylsäure, eines Acrylsäurederivates oder einer copolymerisierbaren Vinylverbindung mit einem oder mehreren Polyaminen in Gegenwart eines schwefelhaltigen Katalysators bei Temperaturen von 100-180 °C, dadurch gekennzeichnet, daß man die Umsetzung in Gegenwart eines Alkohols oder Polyols mit einem Siedepunkt von über 95 °C durchführt und das Reaktionsprodukt anschließend mit Wasser oder einem Gemisch aus Wasser und einem mit Wasser mischbaren organischen Lösemittel bei Temperaturen von 70-100 °C, vorzugsweise 80-90 °C behandelt und das Polyamin in einer Menge von 0,6-3,0, vorzugsweise 1-2 Moläquivalenten bezogen auf die Nitrilgruppen des Polyacrylnitrils zugesetzt wird.

2. Verfahren nach Anspruch 1, dadurch gekennzeichnet, daß zur Erzielung einer Kettenverlängerung die Umsetzung während 20-40 Minuten bei Temperaturen von 110-120 °C durchgeführt wird.

3. Verfahren gemäß Anspruch 1 oder 2, dadurch gekennzeichnet, daß der Katalysator im Anschluß an die Behandlung des Reaktionsprodukts mit Wasser vorzugsweise als Eisensulfid ausgefällt oder vorzugsweise mit $H_2O_2$ oxidativ behandelt wird.

4. Verfahren gemäß einem der Ansprüche 1-3, dadurch gekennzeichnet, daß das Polymere durch Umsetzen mit einer Säure in ein Salz oder durch Umsetzen mit einem Alkylierungsmittel in eine quaternäre Ammoniumverbindung überführt wird.

5. Verfahren gemäß Anspruch 1-4, dadurch gekennzeichnet, daß der Alkohol oder Polyol in einer Menge von 0,5-10, vorzugsweise 1-5 Moläquivalenten bezogen auf die Nitrilgruppen des Polyacrylnitrils zugesetzt wird.

6. Verfahren gemäß Anspruch 5, dadurch gekennzeichnet, daß ein Alkohol aus der Gruppe $C_nH_{2n-1}OH$, mit n = 4 bis 30, wie beispielsweise 1-Propanol, 1-Butanol, 2-Butanol, 1-Pentanol, 2-Pentanol, 3-Pentanol, 1-Hexanol, 2-Hexanol, 3-Hexanol, 1-Heptanol, 2-Heptanol, 3-Heptanol, 4-Heptanol, 1-Octanol, 1-Dodecanol, Benzylalkohol, vorzugsweise n = 6 bis 10, oder ein Polyole, wie z. B. Ethylenglykol, Diethylenglykol, Triethylenglykol, Polyethylenglykol, 1,2-Propandiol, 1,3-Propandiol, 1,2-Butandiol, 1,3-Butandiol, 1,4-Butandiol, 2,3-Butandiol, 1,4-Pentandiol, 1,5-Pentandiol, 2,3-Pentandiol, 2,4-Pentandiol, 1,2-Hexandiol, 1,5-Hexandiol, 1,6-Hexandiol, 2,3-Hexandiol, 2,5-Hexandiol, 1,4-Dimethylolcyclohexan, Glycerin, 1,2,4-Butantriol, Pentaerythrit, Neopentylglykol, Trimethylolpropan zugesetzt wird.

7. Verfahren nach Anspruch 1-6, dadurch gekennzeichnet, daß der schwefelhaltige Katalysator in einer Menge von 0,005-1,0, vorzugsweise 0,01-0,03 Moläquivalenten bezogen auf die Nitrilgruppen des Polyacrylnitrils zugesetzt wird.

8. Verfahren nach Anspruch 7, dadurch gekennzeichnet, daß als Schwefelaktivator Schwefel, Schwefelwasserstoff oder eine Organoschwefelverbindung mit wenigstens einer Mercapto-, Thiocarbonyl-, Thioamid- oder Thiocarbonsäuregruppe, Schwefelchlorid, Polysulfid oder Phosphorpentasulfid zugesetzt wird.

9. Verfahren nach Anspruch 1-8, dadurch gekennzeichnet, daß als Polyol Ethylenglykol verwendet wird.

10. Verfahren nach Anspruch 1-9, dadurch gekennzeichnet, daß als Polyamin Ethylendiamin verwendet wird.

11. Verfahren nach Anspruch 1-10, dadurch gekennzeichnet, daß als Katalysator elementarer Schwefel verwendet wird.

12. Wasserlösliches Polymeres aus Polyacrylnitril und Polyaminen, erhältlich nach einem Verfahren gemäß einem der Ansprüche 1-11.

## Claims

1. Process for the production of water-soluble polymers or of their salts by reaction of polyacrylonitrile or polyacrylonitrile co-polymers of at least 20 mole % acrylonitrile and up to 80 mole % acrylic acid, of an acrylic acid derivative or of a copolymerisable vinyl compound with one or more polyamides in the presence of a sulphur-containing catalyst at temperatures of 100-180 °C, characterised in that one carries out the reaction in the presence of an alcohol or polyol with a boiling point of over 95 °C and subsequently treats the reaction product with water or a mixture of water and an organic solvent miscible with water at temperatures of 70-100 °C, preferably 80-90 °C, and the polyamine is added in an amount of 0.6-3.0, preferably 1-2 mole equivalents, referred to the nitrile groups of the polyacrylonitrile.

2. Process according to claim 1, characterised in that, for the achievement of a chain elongation, the reaction is carried out for 20-40 minutes at temperatures of 110-120 °C.

3. Process according to claim 1 or 2, characterised in that, in conclusion of the treatment of the reaction product with water, the catalyst is preferably precipitated out as iron sulphide or is preferably oxidatively treated with $H_2O_2$.

4. Process according to one of claims 1-3, characterised in that the polymer is converted by reaction with an acid into a salt or by reaction with an alkylation agent into a quaternary ammonium compound.

5. Process according to claim 1-4, characterised in that the alcohol or polyol is added in an amount of 0.5-10, preferably 1-5 mole equivalents, referred to the nitrile groups of the polyacrylonitrile.

6. Process according to claim 5, characterised in that an alcohol is added from the group $C_nH_{2n+1}OH$, with n = 4 to 30, such as for example propan-1-ol, butan-1-ol, butan-2-ol, pentan-1-ol, pentan-2-ol, pentan-3-ol, hexan-1-ol, hexan-2-ol, hexan-3-ol, heptan-1-ol, heptan-2-ol, heptan-3-ol, heptan-4-ol, octan-1-ol, dodecan-1-ol, benzyl alcohol, preferably n = 6 to 10, or a polyol, such as e. g. ethylene glycol, diethylene glycol, triethyleneglycol, polyethylene glycol, propan-1,2-diol, propane-1,3-diol, butane-1,2-diol, butane-1,3-diol, butan-1,4-diol, butane-2,3-diol, pentane-1,4-diol, pentane-1,5-diol, pentane-2,3-diol, pentane-2,4-diol, hexane-1,2-diol, hexane-1,5-diol, hexane-1,6-diol, hexane-2,3-diol, hexane-2,5-diol, 1,4-dimethylolcyclohexane, glycerol, butane-1,2,4-triol, pentaerythritol, neopentylglycol, trimethylolpropane.

7. Process according to claim 1-6, characterised in that the sulphur-containing catalyst is added in an amount of 0.005-1.0, preferably 0.01-0.03 mole equivalents, referred to the nitrile groups of the polyacrylonitrile.

8. Process according to claim 7, characterised in that, as sulphur activator, there is used hydrogen sulphide or an organo-sulphur compound with at least one mercapto, thiocarbonyl, thioamide or thiocarboxylic acid group, sulphur chloride, polysulphide or phosphorus pentasulphide.

9. Process according to claim 1-8, characterised in that ethylene glycol is used as polyol.

10. Process according to claim 1-9, characterised in that ethylenediamine is used as polyamide.

11. Process according to claim 1-10, characterised in that elementary sulphur is used as catalyst.

12. Water-soluble polymers of polyacrylonitrile and polyamines, obtainable according to a process according to one of claims 1-11.

**Revendications**

1. Procédé de préparation de polymères solubles dans l'eau ou de leurs sels, par réaction de polyacrylonitrile ou de copolymères de polyacrylonitrile à base d'au moins 20 moles % d'acrylonitrile et jusqu'à 80 moles % d'acide acrylique, d'un dérivé d'acide acrylique ou d'un composé vinylique copolymérisable avec une ou plusieurs polyamines en présence d'un catalyseur contenant du soufre, à des températures de 100 à 180 °C, caractérisé en ce qu'on effectue la réaction en présence d'un alcool ou d'un polyol ayant un point d'ébullition supérieur à 95 °C et en ce qu'ensuite on traite le produit réactionnel par de l'eau ou un mélange d'eau et d'un solvant organique miscible à l'eau, à des températures de 70 à 100 °C, de préférence de 80 à 90 °C, et en ce qu'on ajoute la polyamine en une quantité de 0,6 à 3,0, de préférence de 1 à 2, équivalents molaires par rapport aux groupes nitrile du polyacrylonitrile.

2. Procédé suivant la revendication 1, caractérisé en ce que, pour obtenir un allongement de chaîne, on effectue la réaction pendant 20 à 40 minutes à des températures de 110 à 120 °C.

3. Procédé suivant l'une des revendications 1 et 2, caractérisé en ce qu'on fait précipiter le catalyseur, de préférence sous la forme de sulfure de fer, à la suite du traitement du produit réactionnel avec de l'eau ou on le traite par voie d'oxydation de préférence avec du $H_2O_2$.

4. Procédé suivant l'une des revendications 1 à 3, caractérisé en ce que le polymère est converti en un sel par réaction avec un acide ou en un composé d'ammonium quaternaire par réaction avec un agent d'alkylation.

5. Procédé suivant l'une des revendications 1 à 4, caractérisé en ce que l'alcool ou le polyol est ajouté en une quantité de 0,5 à 10, de préférence de 1 à 5, équivalents molaires par rapport aux groupes nitrile du polyacrylonitrile.

6. Procédé suivant la revendication 5, caractérisé en ce qu'on ajoute un alcool du groupe $C_nH_{2n+1}OH$, où n = 4 à 30, comme par exemple du 1-propanol, du 1-butanol, du 2-butanol, du 1-pentanol, du 2-pentanol, du 3-pentanol, du 1-hexanol, du 2-hexanol, du 3-hexanol, du 1-heptanol, du 2-heptanol, du 3-heptanol, du 4-heptanol, du 1-octanol, du 1-dodécanol, de l'alcool benzylique, n ayant de préférence une valeur de 6 à 10, ou un polyol, tel que par exemple de l'éthylèneglycol, du diéthylèneglycol, du triéthylèneglycol, du polyéthylèneglycol, du 1,2-propanediol, du 1,3-propanediol, du 1,2-butanediol, du 1,3-butanediol, du 1,4-butanediol, du 2,3-butanediol, du 1,4-pentanediol, du 1,5-pentanediol, du 2,3-pentanediol, du 2,4-pentanediol, du 1,2-hexanediol, du 1,5-hexanediol, du 1,6-hexanediol, du 2,3-hexanediol, du 2,5-hexanediol, du 1,4-diméthyloicyclohexane, de la glycérine, du 1,2,4-butanetriol, de la pentaérythrite, du néopentylglycol, du triméthylolpropane.

7. Procédé suivant l'une des revendications 1 à 6, caractérisé en ce que le catalyseur contenant du soufre est ajouté en une quantité de 0,005 à 1,0, de préférence de 0,01 à 0,03, équivalents molaires par rapport aux groupes nitrile du polyacrylonitrile.

8. Procédé suivant la revendication 7, caractérisé en ce que, comme activeur à base de soufre, on ajoute du soufre, de l'acide sulfhydrique ou un composé organique du soufre comportant au moins un groupe mercapto, thiocarbonyle, thioamide ou thiocarboxylique, du chlorure de soufre, un polysulfure ou du pentasulfure de phosphore.

9. Procédé suivant l'une des revendications 1 à 8, caractérisé en ce qu'on utilise de l'éthylèneglycol, comme polyol.

10. Procédé suivant l'une des revendications 1 à 9, caractérisé en ce qu'on utilise de l'éthylènediamine, comme polyamine.

11. Procédé suivant l'une des revendications 1 à 10, caractérisé en ce qu'on utilise du soufre élémentaire, comme catalyseur.

12. Polymère soluble dans l'eau à base de polyacrylonitrile et de polyamines, obtenu selon un procédé suivant l'une des revendications 1 à 11.